## Europäisches Patentamt
## European Patent Office
## Office européen des brevets

(11) Numéro de publication: **0 130 855**
**B1**

(12) **FASCICULE DE BREVET EUROPEEN**

(45) Date de publication du fascicule du brevet:
**17.11.88**

(21) Numéro de dépôt: **84400930.8**

(22) Date de dépôt: **07.05.84**

(51) Int. Cl.⁴: **C 08 L 23/02, C 08 L 51/06**

(54) Compositions thermoplastiques contenant un polymère greffé par des silanes permettant d'améliorer les propriétés physiques d'une polyoléfine thermoplastique, procédé permettant cette amélioration.

(30) Priorité: **17.05.83 FR 8308139**

(43) Date de publication de la demande:
**09.01.85 Bulletin 85/2**

(45) Mention de la délivrance du brevet:
**17.11.88 Bulletin 88/46**

(84) Etats contractants désignés:
**AT BE CH DE FR IT LI LU NL SE**

(56) Documents cités:
**DE - A - 2 926 830**
**FR - A - 2 030 899**
**FR - A - 2 143 674**

**PATENTS ABSTRACTS OF JAPAN, vol. 2, no. 67, 20 mai 1978, page 561 C 78; & JP - A - 53 21 249 (FURUKAWA DENKI KOGYO K.K.) 27-02-1978**

(73) Titulaire: **ALPHACAN, 22, Avenue de la Jonchère, F-78170 LA CELLE SAINT CLOUD (FR)**

(72) Inventeur: **Beis, Dominique, 10, Rue des trois Carreaux, F-58000 Nevers (FR)**
Inventeur: **Prevotat, Bernard, 123, Rue de Parigny, F-58000 Nevers (FR)**

(74) Mandataire: **Foiret, Claude, ATOCHEM Département Propriété Industrielle, F-92091 Paris la Défense 10 Cédex 42 (FR)**

## Description

La présente invention concerne les compositions thermoplastiques contenant un polymère greffé par des silanes. Plus particulièrement elle concerne un procédé permettant d'améliorer les propriétés physiques d'une polyoléfine thermoplastique.

Les polymères greffés par des silanes sont en général, comme décrit dans le brevet 2 030 899, des polymères obtenus par réaction d'une polyoléfine, polyéthylène ou copolymère d'éthylène avec une petite quantité de propylène et/ou de butylène, avec un silane de formule générale RR′ Si Y₂ dans laquelle R représente un radical hydrocarboné monovalent oléfiniquement insaturé ou un radical hydrocarbonoxy, chaque Y représente un radical organique hydrolysable et R′ représente un radival R ou un radical Y. La réaction s'effectue habituellement en présence d'un composé capable de créer dans la polyoléfine des sites à radicaux libres, à une température supérieure à 140 °C, dans une extrudeuse ou tout autre appareil mélangeur. Le produit obtenu est ensuite exposé à l'humidité en présence d'un catalyseur de condensation des silanols.

Ces produits utilisés tels quels présentent de bonnes propriétés, mais par contre présentent l'inconvénient d'être onéreux, du fait de leur mode de préparation, par rapport à une simple polyoléfine.

Selon l'invention en mélangeant une polyoléfine thermoplastique (A) compatible avec un polymère greffé par des silanes (B) on obtient après hydrolyse un produit final possédant d'excellentes propriétés physiques, comme la tenue sous contrainte à température élevée, la résistance à la fissuration sous contrainte (stress cracking), les résistances au choc et à l'abrasion.

L'invention peut également se définir comme un procédé permettant d'améliorer les propriétés physiques d'une polyoléfine thermoplastique (A) en la mélangeant à un polymère greffé par des silanes (B) caractérisé en ce que le mélange de: 20 à 99,5 et mieux de 30 à 99 parties en poids de polyoléfine thermoplastique (A) compatible avec 0,5 à 80 et mieux de 1 à 70 parties en poids d'un polymère greffé par des silanes (B), après mise en forme, en présence de préférence de catalyseur de condensation des silanols, est réticulé par hydrolyse.

La compatibilité que doivent présenter les deux polymères (A) et (B) pour que l'invention s'applique dans de bonnes conditions est un caractère dont la définition scientifique n'a jamais été donnée de façon tout à fait satisfaisante, bien que son importance pratique soit considérable et qu'il soit bien connu de l'homme de l'art. Sans entrer dans les détails fort controversés de miscibilité réciproque partielle des polymères considérés, on considère ici que deux polymères sont compatibles s'il est possible de les mélanger de façon à obtenir une matière présentant une tenue mécanique voisine de, ou supérieure à celle du plus faible d'entre eux. Selon cette définition et à titre d'exemple les couples:

Polyéthylène haute densité (PEDH) greffé – polyéthylène basse densité (PEBD)

PEHD greffé – copolymère éthylène-acétate de vinyle (EVA)

EPR ou EPDM greffé – polypropylène (PP) sont compatibles tandis qu'un homopolymère de chlorure de vinyle et un homopolymère de styrène sont incompatibles.

Les compositions les plus intéressantes selon l'invention sont les mélanges de polyoléfine thermoplastique, choisie parmi les homopolymères tel le polyéthylène ou polypropylène, ou encore les copolymères tel l'EVA, avec un polymère, homopolymère ou copolymère, greffé silane et plus particulièrement une polyoléfine greffée silane. L'invention est tout particulièrement recommandée pour les mélanges de polyoléfine thermoplastique basse densité avec une polyoléfine haute densité greffée silane.

Sans que cela soit impératif, il est recommandé que les viscosités des deux composants (A) et (B) soient voisines et adaptées au mode de transformation choisi, par exemple un indice de fluidité selon la norme ISO R292 (Melt Index, MI) 2,16 à 190 °C compris entre 0,05 et 2,0 pour l'extrusion ou entre 0,5 et 20 pour le rotomoulage et l'injection.

Avant utilisation du mélange on peut éventuellement ajouter un catalyseur de condensation des silanols de façon à accélérer la réticulation du polymère greffé après transformation du mélange et exposition à l'humidité du produit obtenu. Ces catalyseurs de condensation sont connus de l'homme de l'art, ce sont par exemple des carboxylates métalliques tels que dilaurate dibutyle d'étain, acétate stanneux, octoate d'étain, napténate de plomb, octoate de zinc, 2 éthylhéxoate de fer et naphténates de cobalt, des composés organométalliques tels que les esters de titane et des chélates, des bases organiques telles que les amines.

Les compositions selon l'invention sont utilisables dans toutes les techniques connues de transformation telles que: moulage, extrusion, laminage, etc... Elles présentent de nombreux avantages sur les compositions constituées en totalité de polymère greffès. Sur le plan économique il va de soi qu'il est moins onéreux, pour un même résultat final, d'incorporer aux mélanges un polymère non greffé en substitution partielle d'un polymère greffé de prix plus élevé. Cette économie est d'autant plus intéressante que de façon surprenante les propriétés finales d'un produit obtenu à partir d'un mélange selon l'invention sont supérieures à celles d'un produit obtenu à partir d'un polymère greffé seul.

Après transformation le produit obtenu est hydrolysé. L'hydrolyse peut s'effectuer de façon accélérée en mettant le produit obtenu directement en contact avec l'eau chaude ou encore en l'exposant à la vapeur. Elle pourra cependant se faire à température ambiante, le temps de réaction étant alors fonction du volume des pièces à traiter.

Les charges et plastifiants habituels peuvent être incorporés sans difficulté à ces mélanges grâce à la présence du polymère non greffé; ce n'est pas toujours le cas pour les compositions constituées en totalité de polymère greffé, le greffage s'avérant souvent très délicat en présence de charges ou d'autres additifs.

Les exemples suivants illustrent l'invention sans toutefois la limiter.

Exemple 1

Au moyen d'une extrudeuse monovis SAMAFOR® 60, on extrude à 225 °C avec un débit de 45 kg/h un mélange de polyéthylène haute densité de MI 2,16 à 190 °C de 0,8 (ELTEX® B 2008), de vinyltrimétoxysilane et de 2,5 diméthyl 2,5 di(ter)-butyl peroxy hexane dans les proportions respectives en poids de 100; 1,6 et 0,05. Le produit greffé (B) obtenu est refroidi et granulé. Il possède un MI 2,16 à 190 °C de 0,2.

A 16.66 parties en poids de ce polymère greffé (B) sont mélangées 83,33 parties de polymère (A) non greffé qui est un polyéthylène basse densité de MI 2,16 à 190 °C de 0,2 (LOTRENE® FX 3680). Ce mélange est extrudé en présence de 0,05 partie en poids du mélange de dibutyldilaurate d'étain au moyen d'une extrudeuse monovis SAMAFOR 60 à une température de 180 °C en entrée d'extrudeuse et de 210 °C à la filière.

Après 8 heures d'hydrolyse dans l'eau à 95 °C du produit extrudé, le fluage mesuré sur un échantillon à 200 °C sous 2 bars et après 15 minutes est de 65 %.

Si comparativement on opère sur des mélanges 16,66/83,33 des mêmes polymères non greffés, on obtient un produit qui fond vers 130 °C dont le fluage n'est pas mesurable.

Si toujours comparativement on effectue le greffage à partir d'un mélange polyéthylène haute densité (ELTEX B 20008), polyéthylène basse densité (LOTRENE FX 3680), vinyltrimétoxysilane et 2,5 diméthyl-2,5 di(tert-butyl peroxy) hexane dans les proportions respectives en poids de 16,66; 83,33; 0,26 et 0,008 on obtient un produit extrudé fini qui après 8 heures d'hydrolyse à 95 °C s'allonge puis casse avant 15 minutes sous 2 bars à 200 °C, le fluage n'étant pas mesurable.

Cet exemple permet de constater que l'association de polymères greffés et non greffés non seulement permet d'utiliser des mélanges plus économiques mais encore conduit à un produit final aux propriétés supérieures à celles d'un produit obtenu à partir de polymères greffés en totalité.

Exemple 2

On opère dans les conditions de l'exemple 1 mais avec des proportions de
– 50 de (A) pour 50 de (B)
– 75 de (A) pour 25 de (B)
On obtient sur le produit final des valeurs de fluage respectivement de 19 à 34 %.

Exemple 3

Dans les conditions de l'exemple 1 avec les mêmes produits dans les proportions en poids de 96 parties de (A) et 4 parties de (B) en présence de 0,05 % en poids de dibutyldilaurate d'étain on extrude un tube.

Les temps nécessaire pour faire éclater le tube à 90 °C sous différentes contraintes ($\sigma$) sont donnés ci-dessous
$\sigma$ = 3,2 MPa: 6 minutes
$\sigma$ = 3,0 MPa: 960 heures
$\sigma$ = 2,8 MPa: >2000 heures.

A titre comparatif sont donnés les résultats obtenus sur un tube fabriqué dans les mêmes conditions mais en remplaçant le polymère B par un polyéthylène haute densité (ELTEX B 2008) non greffé:
$\sigma$ = 3,2 MPa: 5 minutes
$\sigma$ = 3,0 MPa: 20 minutes
$\sigma$ = 2,8 MPa: 9 heures.

Ces mêmes derniers résultats sont obtenus sur un tube fabriqué dans les mêmes conditions mais en remplaçant le mélange A et B par un mélange de polymères greffés obtenu comme dans l'exemple 1 à partir de polyéthylène haute densité (ELTEX B 2008), polyéthylène basse densité (LOTRENE FX 3680), vinyltrimétoxysilane et 2,5 diméthyl-2,5 (tert-butylperoxy) hexane dans les proportions respectives en poids de 4; 96; 0,063 et 0,002.

Comme dans l'exemple 1 on constate l'intérêt d'utiliser un mélange (A) et (B) plutôt que des polymères totalement greffés.

Exemple 4

Au moyen d'une extrudeuse SAMAFOR 60 on extrude à 220 °C avec un débit de 30 kg/h un mélange d'EPR additionné de polyéthylène haute densité (VISTALON® VM2), de vinyltrimétoxy silane et de 2,5 diméthyl-2,5 di(tert-butyl peroxy) hexane dans les proportions respectives en poids de 100; 2 et de 0,075. Le produit greffé (B) obtenu est refroidi et granulé.

A 25 parties en poids de ce polymère greffé (B) sont mélangées 75 parties de polymère (A) non greffé qui est un polypropylène (GT 6100 SHELL). Ce mélange est extrudé en présence de 0,05 partie en poids du mélange de dibutyldilaurate d'étain au moyen d'une extrudeuse monovis SAMAFOR 60 à 230 °C.

Après 8 heures d'hydrolyse dans l'eau à 95 °C du produit extrudé, une éprouvette est étirée à température ambiante jusqu'à 500 % d'allongement puis portée à 250 °C. Après moins de 10 minutes l'allongement résiduel est inférieur à 5 %.

A titre comparatif on répète l'exemple mais en remplaçant le polymère greffé B par l'EPR additionné de polyéthylène haute densité non greffé. A 250 °C le point de fusion est dépassé et l'éprouvette se déforme.

Toujours à titre comparatif si on veut utiliser le même mélange mais les deux polymères étant greffés, on s'aperçoit qu'il est impossible de greffer un mélange possédant un telle proportion de polypropylène.

Cet exemple montre que l'association de deux polymères compatibles dont un seul est greffé permet d'obtenir un produit final possédant des propriétés intéressantes en particulier à température élevée.

**Revendications**

1. Procédé permettant d'améliorer les propriétés physiques d'une polyoléfine thermoplastique (A) en la mélangeant à un polymère greffé par des silanes portant des groupes hydrolysables (B) caractérisé en ce que le mélange de: 20 à 99,5 parties en poids de polyoléfine thermoplastique (A) compatible avec 0,5 à 80 parties en poids d'un polymère greffé par des silanes (B) après mise en forme, en présence de préférence de catalyseur de condensation des silanols, est réticulé par hydrolyse.

2. Procédé selon la revendication 1 caractérisé en ce que le polymère (B) est une polyoléfine.

3. Procédé selon l'une des revendications 1 à 2 caractérisé en ce que la polyoléfine thermoplastique (A) est une polyoléfine basse densité tandis que le polymère (B) est une polyoléfine haute densité greffée silane.

4. Procédé selon l'une des revendications 1 à 3 caractérisé en ce que le mélange mis en forme par extrusion est constitué des polymères (A) et (B) possédant des viscosités, exprimées en indice de fluidité (Melt Index) 2,16 à 190°C, comprises entre 0,05 et 2,0.

5. Procédé selon l'une des revendications 1 à 3 caractérisé en ce que le mélange mis en forme par rotomoulage ou injection est constitué des polymères (A) et (B) possédant des viscosités, exprimées en indice de fluidité (Melt Index) 2,16 à 190°C, comprises entre 0,5 et 20.

**Claims**

1. A process enabling the physical properties of a thermoplastic polyolefin (A) to be improved by mixing it with a polymer grafted with silanes carrying hydrolyzable groups (B), characterized in that the mixture of 20 to 99.5 parts by weight of compatible thermoplastic polyolefin (A) with 0.5 to 80 parts by weight of a polymer grafted with silanes (B), after being shaped, is cross-linked by hydrolysis, preferably in the presence of a catalyst of silanol condensation.

2. A process according to Claim 1, characterized in that polymer (B) is a polyolefin.

3. A process according to any one of Claims 1 to 2, characterized in that the thermoplastic polyolefin (A) is a low-density polyolefin whilst polymer (B) is a high-density polyolefin with silane grafts.

4. A process according to any one of Claims 1 to 3, characterized in that the mixture shaped by extrusion consists of polymers (A) and (B) having viscosities, expressed in relation to a Melt Index of 2.16 at 190°C, between 0.05 and 2.0.

5. A process according to any one of Claims 1 to 3, characterized in that the mixture shaped by rotational moulding or injection consists of polymers (A) and (B) having viscosities, expressed in relation to a Melt Index of 2.16 at 190°C, between 0.5 and 20.

**Patentansprüche**

1. Verfahren zur Verbesserung der physikalischen Eigenschaften eines thermoplastischen Polyalkens (A) durch dessen Mischung mit einem mit hydrolysierbare Gruppen aufweisenden Silanen gepfropften Polymeren (B), dadurch gekennzeichnet, dass die Mischung aus 20 bis 99,5 Gewichtsteilen thermoplastischen und mit dem folgenden kompatiblen Polyalkens (A) mit 0,5 bis 80 Gewichtsteilen eines mit Silanen gepfropften Polymeren (B) nach Formung, vorzugsweise in Anwesenheit eines Katalysators für die Kondensation von Silanolen, durch Hydrolyse vernetzt wird.

2. Verfahren nach Patentanspruch 1, dadurch gekennzeichnet, dass das Polymer (B) ein Polyalken ist.

3. Verfahren nach einem der Patentansprüche 1 bis 2, dadurch gekennzeichnet, dass das thermoplastische Polyalken (A) ein Weichpolyalken ist, während das Polymer (B) ein silangepfropftes Hartpolyalken ist.

4. Verfahren nach einem der Patentansprüche 1 bis 3, dadurch gekennzeichnet, dass die durch Extrusion geformte Mischung aus den Polymeren (A) und (B) mit als Schmelzindex (Melt Index) 2,16 bei 190°C ausgedrückten Viskositäten zwischen 0,05 und 2,0 besteht.

5. Verfahren nach einem der Patentansprüche 1 bis 3, dadurch gekennzeichnet, dass die durch Rotationsformen oder Spritzung geformte Mischung aus den Polymeren (A) und (B) mit als Schmelzindex (Melt Index) 2,16 bei 190°C ausgedrückten Viskositäten zwischen 0,5 und 20 besteht.